# EUROPÄISCHE PATENTSCHRIFT

(11) **EP 3 561 456 B1**
(45) Veröffentlichungstag und Bekanntmachung des Hinweises auf die Patenterteilung: **15.01.2025**
(21) Anmeldenummer: 19170596.1
(22) Anmeldetag: 23.04.2019
(51) Int. Cl.: G01D 4/00, G01D 21/00, E03B 7/07, G01M 3/26

(54) **VERFAHREN UND VORRICHTUNG ZUR VERBRAUCHSMESSUNG**
METHOD AND DEVICE FOR MEASUREMENT OF CONSUMPTION
PROCÉDÉ ET DISPOSITIF DE MESURE DE CONSOMMATION

(30) Priorität: 23.04.2018 DE 102018109734
(43) Veröffentlichungstag der Anmeldung: 30.10.2019
(73) Patentinhaber: BEULCO GmbH & Co. KG, 57439 Attendorn (DE)
(72) Erfinder: Schütz, Jürgen Christian, 35630 Ehringshausen (DE); Lange, Martin, 45527 Hattingen (DE); Klimpel, Sebastian, 57439 Attendorn (DE); Ufermann, Hans-Dieter, 59494 Soest (DE)
(74) Vertreter: Schneiders & Behrendt Bochum

(56) Entgegenhaltungen:
- WO-A1-2017/152279
- WO-A1-2017/203491
- DE-U1- 202014 104 154
- US-A1- 2011 308 638
- US-A1- 2013 226 485
- US-A1- 2016 171 479
- US-A1- 2016 191 481
- BASTIAN VAN VENROOY: "Sicherheit in der Heimautomatisierung", 18 February 2016 (2016-02-18), XP055617754, Retrieved from the Internet <URL:https://www.h-brs.de/files/20171215_fbinf_mclab_2016_venrooy_ba_sicherheitsmechanismen_mk.pdf> [retrieved on 20190903]

## Beschreibung

Die Erfindung betrifft ein System zur Erfassung, Überwachung und / oder Steuerung von Medienzuständen und / oder -verbräuchen an einem Rohrleitungssystem.

Die DE 20 2014 104 154 U1, die WO 2017/203491 A1 und die WO 2017/152279 A1 betreffen Systeme zur Erfassung, Überwachung und/oder Steuerung von Medienzuständen und/oder -verbräuchen in einem Rohrleitungssystem, wobei hier eine Steuereinheit der primären Sensoreinheit beschrieben ist, welche eine Anbindungsschnittstelle aufweist, über welche sekundäre Sensoreinheiten zur Erfassung, Überwachung und/oder Steuerung von Medienzuständen und/oder -verbräuchen an die Steuereinheit angebunden sind. Außerdem ist eine Kommunikationsschnittstelle erwähnt, über welche die Steuereinheit auf den erfassten, überwachten oder gesteuerten Medienzuständen und/oder -verbräuchen basierende Daten kommuniziert. In US 2011/308638 A1 wird auch ein System zur Erfassung, Überwachung und/oder Steuerung von Medienzuständen und/oder -verbräuchen an einem Rohrleitungssystem beschrieben. Dieses System umfasst ebenfalls eine Steuereinheit. Auch ist eine Anbindungsschnittstelle beschrieben, welche dazu ausgebildet ist, Komponenten zur Erfassung und/ oder Überwachung von Medienzuständen und/oder -verbräuchen an die Steuereinheit anzubinden. Zudem wir eine Kommunikationsschnittstelle beschrieben, über welche die Steuereinheit auf den erfassten, überwachten oder gesteuerten Medienzuständen und/oder -verbräuchen basierende Daten kommuniziert. Die US 2013/226485 A1 offenbart ein fernsteuerbares Ventil, über das sich der Wasserverbrauch über einen Fernzugriff eines Wasserversorgers mittels der Kommunikationsschnittstelle regulieren lässt. Die US 2016/171479 A1 beschreibt ein Verfahren, das zum Aufbau einer verschlüsselten Verbindung zwischen einem System und einer Komponente (Maschine-zu-Maschine-Gerät) verwendet werden kann. Aus der US 2016/191481 A1 ist ein Verfahren bekannt, das einen Zugriff auf ein elektronisches Gerät beschreibt, wobei Authentifizierungsdaten von einem getrennten sekundären elektronischen Gerät gesammelt werden, um von einem weiteren Gerät einen Authentifizierungsschlüssel für den Zugriff zu erhalten.

Die Erfassung, Überwachung und Steuerung von Medienzuständen und Medienverbräuchen erfolgt insbesondere in der Wasserversorgung derzeit dennoch meist händisch durch Ablesung von Wasserzählern vor Ort und manuelle Absperrung bzw. Öffnung von Hausanschlussventilen.

Es ist daher Aufgabe der Erfindung, ein System anzugeben, das eine einfache und automatische Erfassung, Überwachung und / oder Steuerung von Medienzuständen und / oder -verbräuchen an einem Rohrleitungssystem ermöglicht.

Gelöst wird diese Aufgabe durch ein System mit den Merkmalen des Anspruchs 1 Dadurch, dass das System eine Steuereinheit, wenigstens eine Anbindungsschnittstelle, welche dazu ausgebildet ist Komponenten zur Erfassung, Überwachung und/ oder Steuerung von Medienzuständen und / oder -verbräuchen an die Steuereinheit anzubinden, und wenigstens eine Kommunikationsschnittstelle, über welche die Steuereinheit auf den erfassten, überwachten oder gesteuerten Medienzuständen und / oder -verbräuchen basierende Daten, insbesondere an eine Cloudplattform, kommuniziert, umfasst, kann eine einfache und automatische Erfassung, Überwachung und / oder Steuerung von Medienzuständen und / oder -verbräuchen an einem Rohrleitungssystem ermöglicht werden. Die über die Anbindungsschnittstelle angebunden Komponenten ermöglichen eine besonders einfache Erfassung, Überwachung oder Steuerung der Medienzustände oder Medienverbräuchen an einem Rohrleitungssystem durch die Steuereinheit des Systems. Die Erfassung, Überwachung und Steuerung der Medienverbräuche und der Medienzustände an dem Rohrleitungssystem lässt sich insbesondere durch die vorgesehene Kommunikationsschnittstelle vereinfachen, über welche die Steuereinheit auf den erfassten, überwachten oder gesteuerten Medienzuständen und- oder - verbräuchen basierende Daten kommuniziert. Mit der Kommunikation dieser Daten kann eine effektive Überwachung des Rohrleitungssystem und der Medienzustände oder der Medienverbräuche erreicht werden.

Bei dem Rohrleitungssystem kann es sich um eine Kaltwasserleitung zur Versorgung eines Hauses, Haushalts oder Betriebs handeln. Das Rohrleitungssystem kann aber auch eine Warmwasserleitung umfassen. Das überwachte Rohrleitungssystem umfasst ferner neben dem Rohrleitungssystem des angeschlossenen Gebäudes auch die Hausanschlussleitung und Teile des öffentlichen Wasserversorgungsnetzes. Mit den über die Anbindungsschnittstelle verbindbaren Komponenten ist ein modulares System gegeben, dass einen einfach erweiterbaren Aufbau bildet. Über die Kommunikationsschnittstelle kann das System mit bereits existierenden Smart-Home-Systemen oder Alarmanlagen kombiniert werden. Hierzu nutzt die Kommunikationsschnittstelle vorzugsweise den KNX-Standard und / oder andere gängige Smart Home-Protokolle. Auch eine Anbindung an das von Amazon vertriebene Alexa-System und / oder ähnliche Systeme kann über die Kommunikationsschnittstelle realisiert werden. Die Steuereinheit bietet über die Kommunikationsschnittstelle vorzugsweise einen Zugang über den beispielsweise Wasserversorger externen Zugriff auf das System, insbesondere auf die angebundenen Komponenten haben. Über die Kommunikationsschnittstelle ist eine Fernablesung der mit der Steuereinheit über die Anbindungsschnittstelle verbundenen Medienverbrauchszählern möglich. Die Medienverbrauchszähler können direkt mit der Steuereinheit über die Anbindungsschnittstelle verbunden sein, aber es kann auch eine Erfassungsschnittstelle zwischengeschaltet sein.

Die Anbindungsschnittstelle kann mehrere Steckplätze für eine drahtgebundene Kommunikation mit angebundenen Komponenten aufweisen und außerdem, weiter bevorzugt, eine drahtlose Kommunikation mit den angebundenen Komponenten ermöglichen. Über die Kommunikationsschnittstelle können die auf den erfassten, überwachten oder gesteuerten Medienzuständen und / oder -verbräuchen basierenden Daten mittels einer im Haushalt bestehenden Internetverbindung oder einer integrierten SIM Karte mit einem Datenanschluss beispielsweise in eine Cloud (d.h. an einen über das Internet angebundenen Server) übertragen werden. Die Kommunikationsschnittstelle kann eine Verbindung mittels WLAN oder LAN zu einem vorhandenen Router aufbauen. Alternativ können die Daten über das GSM-Netz oder andere IoT-Netze übermittelt werden. Hierzu kann der Hausanschlussbesitzer die Übertragung der Daten freigeben. Die Übertragung der Daten kann verschlüsselt erfolgen. Vorzugsweise werden die Daten so übermittelt, dass diese mit den vorhandenen Systemen verarbeitet werden können. Dabei sollte vorzugsweise der OMS Standard genutzt werden. Auf die in die Cloud übertragenen Daten können bevorzugt sowohl der Wasserversorger als auch der Endkunde zugreifen. Die auf den erfassten, überwachten oder gesteuerten Medienzuständen und / oder - verbräuchen basierenden Daten können vom Wasserversorger beispielsweise zur Abrechnung, Tarifoptimierung oder Netztransparenz genutzt werden. Hierdurch kann die Steuerung des Wassernetzes verbessert werden. So lässt sich durch den Versorger auch sehr effizient mittels verbrauchsorientierter Pumpensteuerung ein erforderlicher Mindestdruck im Rohrleitungssystem einstellen, wenn das System mit einem Drucksensor verbunden ist. Die Informationen zu den vorliegenden Drücken an den Hausanschlüssen können so zur effektiven Steuerung der Pumpen des Wasserversorgers genutzt werden.

Über die Steuereinheit lassen sich Verbrauchsdaten und Verbrauchsverhalten der Nutzer einfach erfassen und über die Kommunikationsschnittstelle beispielsweise an den Versorger kommunizieren, um die Daten und das Verhalten auszuwerten. Die beispielsweise an eine Cloud übertragenen Wasserverbrauchsdaten kann der Wasserversorger so direkt auf der Plattform oder über eine Schnittstelle zu seinem Abrechnungssystem zur Abrechnung der Wasserverbräuche an den Endkunden nutzen. Die Zuordnung des Systems an den einzelnen Verbrauchsanschluss kann über die IPv6-Adresse erfolgen. Ist das System über die Kommunikationsschnittstelle zeitweise nicht erreichbar, kann der Versorger durch Überprüfung umliegender Verbrauchsanschlüsse überprüfen, ob lediglich der Internetanschluss des Hausanschlussbesitzers oder der Stromanschluss des Wasseranschlussbesitzers von einer Störung betroffen ist oder die umliegenden Haushalte ähnliche Probleme aufweisen. Über die Kommunikationsschnittstelle sind auch automatische Updates für die Software der Steuereinheit möglich. Die beispielsweise in einer Cloud gespeicherten Daten können vom Endbenutzer auch über eine App beispielsweise auf einem Smartphone, Tablet oder anderem Datenverarbeitung- und Anzeigegerät eingesehen werden.

Bei dem Rohrleitungssystem handelt es sich bevorzugt um den Endverbraucheranschluss bzw. Hausanschluss zwischen dem öffentlichen Versorgungsnetz und dem daran angeschlossenen Hausnetz des Endverbrauchers. Weiter bevorzugt handelt es sich bei dem Endverbraucheranschluss bzw. Hausanschluss um den Trinkwasserhausanschluss oder die Übergabestelle oder die Wasserzähleranlage.

Erfindungsgemäß umfassen die Komponenten zur Überwachung des Medienverbrauchs wenigstens einen Drucksensor zur Erfassung des Mediendruckes im Rohrleitungssystem, wobei die Komponenten zur Steuerung des Medienverbrauchs wenigstens ein über die wenigstens eine Anbindungsschnittstelle ansteuerbares Ventil umfassen, mit welchem der Medienfluss im Rohrleitungssystem kontrolliert werden kann, wobei das ansteuerbare Ventil einen Stellantrieb mit Endlagenschaltern aufweist, wobei die Endlagenschalter dazu eingerichtet sind, ein geschlossenes oder offenes ansteuerbares Ventil zu melden, wobei die Komponenten zur Erfassung des Medienverbrauchs eine Erfassungsschnittstelle aufweisen, die dazu ausgebildet ist, einen von einem Medienverbrauchszähler gezählten Medienverbrauch zu erfassen, wobei die Steuereinheit dazu eingerichtet ist, eine Manipulationsverdachts- und/oder Defektmeldung an einen Versorger zu senden, sofern der Medienverbrauchszähler einen Durchfluss bei geschlossenem Ventil erfasst oder sofern kein Durchfluss bei offenem Ventil vorhanden ist, trotz eines Druckabfalls am Drucksensor. Hierdurch kann einfach eine Manipulationsverdachts- und/oder Defektmeldung an den Versorger übermittelt werden, dass der Verstellantrieb vom Ventil entfernt wurde oder das steuerbare Ventil defekt ist.

Eine besonders vorteilhafte Ausführung dieses Systems sieht vor, dass die Komponenten zur Steuerung von Medienzuständen wenigstens ein Spülsystem mit vorzugsweise mindestens einem Desinfektionsmodul im Rohrleitungssystem umfassen. Mit einem Spülsystem kann in einer Urlaubsfunktion des Systems eine ausreichende Spülung des Rohrleitungssystems sichergestellt werden. Hierzu wird ein über die Steuereinheit ansteuerbares Ventil kurzzeitig geöffnet und wieder geschlossen. Mit einem solchen Spülsystem kann der Wasserversorger auch eine Spülung des Abwassernetzes automatisch einleiten. Über eine solche Spülung des Abwassernetzes kann das System den Wasserversorger automatisch über die Kommunikationsschnittstelle informieren. Ist der Wasserverbrauch im Rohrleitungssystem über einen gewissen Zeitraum kleiner als das Volumen in dem Rohrleitungssystem und der normale Medienverlust kann ebenfalls eine Alarmmeldung an den Wasserversorger gesendet werden und eine automatische Spülung durch das Spülsystem eingeleitet werden. Umfasst das Spülsystem ein Desinfektionsmodul ist zudem eine automatische Desinfektion des Rohrleistungssystems insbesondere im Falle eines Legionellenbefalls möglich.

Mit der Erfassung des Mediendruckes über einen mittels Anbindungsschnittstelle angebundenen Drucksensor kann der Mediendruck im Rohrleitungssystem überwacht werden. Der Drucksensor ist vorzugsweise vor einem Druckminderer, also stromaufwärts des Druckminderers im Rohrleitungssystem eines Verbraucheranschlusses angeordnet. Die Informationen zu den vorliegenden Drücken an den Hausanschlüssen können so zur effektiven Steuerung der Pumpen des Wasserversorgung genutzt werden. Hierzu werden die vom Drucksensor erfassten Drücke vorzugsweise über die Kommunikationsschnittstelle an den Wasserversorger übermittelt.

Das ansteuerbare Ventil ist vorzugsweise stromaufwärts vor dem Medienverbrauchszähler im Rohrleitungssystem angeordnet. Mit dem ansteuerbaren Ventil wird vorzugsweise der Medienfluss einer Kaltwasserleitung des Rohrleitungssystems kontrolliert. In einer besonders vorteilhaften Ausgestaltung umfasst das System zudem ein ansteuerbares Ventil zur Kontrolle des Medienflusses einer Warmwasserleitung des Rohrleitungssystems. Die Ansteuerung des Ventils oder der Ventile erfolgt einfach über die Anbindungsschnittstelle, über welche die Komponenten an die Steuereinheit angebunden sind. Diese Anbindung kann drahtgebunden oder drahtlos realisiert sein. Mit einem über die Steuereinheit fernsteuerbaren Ventil lässt sich der Wasserverbrauch einzelner Haushalte über den Fernzugriff des Wasserversorgers mittels der Kommunikationsschnittstelle regulieren. Im Falle von kurzfristigen oder längerfristigen Versorgungsengpässen aufgrund von Wasserknappheit und / oder bei Netzstörungen und / oder schädlichen Beeinträchtigungen im Trinkwassernetz kann der Wasserversorger über das ansteuerbare Ventil die Abgabemenge am Hausanschluss einschränken und gegebenenfalls sogar komplett absperren. Das über die Kommunikationsschnittstelle aus der Ferne ansteuerbare Ventil, beispielsweise an einer Kaltwasserleitung eines Hausanschlusses, ermöglicht die Absperrung durch den Versorger. Auf diese Weise können säumige Verbraucher auf einfache Weise abgesperrt werden und die Realisierung beispielsweise von Prepaid-Tarifen im Wasserversorgungsbereich vereinfacht werden. Außerdem lassen sich Volumentarife in der Wasserversorgung über das System einfach verwalten und eine effektive Wasserrationierung sicherstellen. Hierdurch lassen sich neue Tarife und Inkassofunktionen durch die Versorgungsunternehmen im System realisieren. Für säumige Kunden kann die Abgabemenge zudem auf ein Minimum reduziert werden oder das Wasser kann nur in einer bestimmten Menge gegen Vorkasse an den Haushalt abgegeben werden.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Besonders vorteilhaft ist eine Ausführungsform, die vorsieht, dass die Komponenten zur Erfassung von Medienverbräuchen eine Erfassungsschnittstelle aufweisen, die dazu ausgebildet ist, die von einem Medienverbrauchszähler gezählten Medienverbräuche zu erfassen. Mit der Erfassungsschnittstelle können Medienverbrauchszähler, wie etwa herkömmliche Wasserzähler in das System eingebunden werden, und beispielsweise die von dem Wasserzähler gezählten Wasserverbräuche vom System erfasst und überwacht werden. Die Erfassungsschnittstelle ist hierzu vorzugsweise über M-BUS oder einen Impulsgeber mit dem Wasserzähler als Medienverbrauchszähler verbunden. Vorzugsweise kommuniziert der Medienverbrauchszähler mittels OMS Standard, insbesondere per Kabel oder drahtlos mit der Erfassungsschnittstelle. Die Erfassungsschnittstelle kann auch zur Auslesung von Medienverbrauchszählern, wie Gaszählern oder Wärmezählern, aber auch Stromzählern ausgebildet sein. Mit der so ausgebildeten Erfassungsschnittstelle kann das System mit bereits existierenden Medienverbrauchszählern verwendet werden. Über die Kommunikationsschnittstelle des Systems lassen sich so die Verbrauchsdaten zu Wasser, Strom, Gas und Wärme der vorhandenen Verbrauchszähler an die Versorger kommunizieren. Ein permanenter Abgleich von Einspeisung und Abgabemengen an die jeweiligen Verbraucher kann den Versorgern einen Hinweis auf Anomalien oder Leckagen in bestimmten Netzbereichen liefern.

Ist das System über die Kommunikationsschnittstelle mit einem Smart Home-System und / oder beispielsweise mit einer Alarmanlage verbunden, können Informationen und Signale verschiedener Smart Home- Devices wie beispielsweise der Alarmanlage eine Ansteuerung des ansteuerbaren Ventils durch die Steuereinheit des Systems auslösen. So kann das System durch die eingehenden Informationen und Signale erkennen, ob sich ein potentieller Verbraucher im Haushalt befindet und das ansteuerbare Ventil davon abhängig öffnen und schließen. Sollte der Versorger das ansteuerbare Ventil geschlossen haben und ein mit dem System verbundene Medienverbrauchszähler weiterhin einen Durchfluss im Rohrleitungssystem messen, kann das System über die Kommunikationsschnittstelle eine Alarmmeldung senden, die eine mögliche Manipulation des Hausanschlusses signalisiert. Eine solche Alarmmeldung kann auch zunächst nur an den Hausanschlussbesitzer gesendet werden und erst bei anhaltenden Unregelmäßigkeiten der Versorger informiert werden. Ein anhaltender Durchfluss im Rohrleitungssystem bei geschlossenem Ventil kann auch ein Anhaltspunkt dafür sein, dass der Stellantrieb des ansteuerbaren Ventils defekt ist. Der Hausanschlussbesitzer sollte für diesen Fall über eine Nachricht zur Überprüfung des Stellantriebes aufgefordert werden. Das ansteuerbare Ventil lässt sich vorzugsweise über die Steuereinheit, eine App oder auch Komponenten eines mit der Steuereinheit verbundenen Smart Home-Systems fernsteuern. Der Zugriff auf das ansteuerbare Ventil ist vorzugsweise zugriffsgeschützt, z.B. durch eine PIN-Nummer.

Eine vorteilhafte Ausführung sieht vor, dass die Komponenten zur Überwachung des Medienzustands wenigstens einen Zustandserfassungssensor zur Erfassung des Medienzustandes im Rohrleitungssystem umfassen. Mit diesem ins System eingebunden Zustandserfassungssensor lässt sich der Medienzustand leicht im Rohrleitungssystem erfassen. Bei dem Zustandserfassungssensor kann es sich um einen Temperatursensor, einen Wasserqualitätssensor, insbesondere um einen Sensor zur Erfassung von Legionellenbefall und / oder anderer mikrobiologischer Beeinträchtigungen handeln. Mit einem solchen Zustandserfassungssensor ist ein umfassendes Wasserdiagnosesystem möglich, welches die Wasserqualität fortlaufend überwacht und bei Abweichungen der Wasserqualität automatisch angebundene, ansteuerbare Ventile schließt und über die Kommunikationsschnittstelle den ermittelten Medienzustand in einer Verdachtsmeldung kommuniziert. Hierdurch können dem Versorgungsunternehmen umgehend auftretende Qualitätsmängel des zur Verfügung gestellten Mediums mitgeteilt werden.

Mit einem angebundenen Temperatursensor kann dem Hausanschlussbesitzer über die Kommunikationsschnittstelle eine Warnmeldung gesendet werden, falls die Wassertemperatur im Rohrleitungssystem in einen Bereich unter 0° sinkt. In dieser Warnmeldung kann der Hausanschlussbesitzer aufgefordert werden, die Wasserhähne zu öffnen, sodass wärmeres Wasser aus dem Rohrleitungssystem nachfließen kann. Bei zu hohen Temperaturen kann ebenfalls eine Alarmmeldung erzeugt werden und der Versorger hierüber automatisch informiert werden. Die Aktivierung eines an das System angebundenen Spülsystems kann ebenfalls abhängig von der über den Sensor gemessenen Wassertemperatur im Rohrleitungssystem erfolgen.

Wird beispielsweise an einem über die Steuereinheit angebundenen Drucksensor ein Druckabfall (z.B. durch Vergleich des gemessenen Drucks mit einem vorgebbaren Schwellenwert) festgestellt, kann über die Kommunikationsschnittstelle eine Fehlermeldung an den Hausanschlussbesitzer und / oder den Wasserversorger gesendet werden. Die Fehlermeldung kann dem Kunden beispielsweise in einer App als Push-Nachricht angezeigt werden. Zudem kann der starke Druckabfall über eine Kontrollleuchte oder ein eingebautes Display an der Steuereinheit angezeigt werden.

Über die Kommunikationsschnittstelle können zudem akustische Signale über mit dem System verbundene Smart Home-Systeme ausgegeben werden. Beispielsweise kann das unter dem Namen Alexa vertriebene Voice Service System eine entsprechende Fehlermeldung ausgeben. Neben Alexa kann die Benachrichtigung des Benutzers auch über die Software Siri der Herstellers Apple und / oder vergleichbare Systeme auf damit ausgestatteten Datenverarbeitungsgeräten erfolgen.

Vorzugsweise ermöglicht die Steuereinheit und / oder die Cloud die statistische Aufbereitung der Verbrauchswerte eines an die Steuereinheit angebundenen Medienverbrauchszählers. Überschreiten die so erfassten Verbrauchswerte einen (optional zeitabhängigen Grenzwert) kann über die Kommunikationsschnittstelle ebenfalls eine Leckageverdachtsmeldung kommuniziert werden. Die ebenfalls als Push-Nachricht in einer App, als leuchtende Warnleuchte an der Steuereinheit oder über ein eingebautes Display an der Steuereinheit angezeigt werden kann. Über die Kommunikationsschnittstelle können auch hier akustische Signale über mit dem System verbundene Smart Home-Systeme, beispielsweise Alexa, ausgeben werden.

Auch ein starker Anstieg des Durchflusses am angebundenen Medienverbrauchszähler kann zu einer entsprechenden Leckageverdachtsmeldung führen. Das Leckageerfassungssignal kann auch aus dem aktuellen Medienverbrauch eines an die Steuereinheit angebundenen Verbrauchszählers generiert werden. Steigt der Medienverbrauch beispielsweise über einen definierten Grenzwert, kann die Steuereinrichtung und / oder die Cloud über die Kommunikationsschnittstelle ebenfalls eine Leckageverdachtsmeldung an den Wasserversorger und / oder den Hausanschlussbesitzer kommunizieren. Vorzugsweise verfügt die Steuereinheit und / oder die Cloud über eine selbst lernende Verbrauchserkennung, welche das Verbrauchsverhalten erlernt und eine Leckageverdachtsmeldung erzeugt, sobald untypische Abweichung auftreten. Bei dem Lernprozess der selbst lernenden Verbrauchserkennung kann optional auch auf Verbrauchsdaten anderer Hausanschlüsse zurückgegriffen werden. Diese Verbrauchsdaten werden der Steuereinheit und / oder der Cloud über die Kommunikationsschnittstelle vorzugsweise vom Versorger zur Verfügung gestellt.

Durch die Anbindung eines Ventils oder eines Medienverbrauchszählers in Kombination mit einem Drucksensor an das erfindungsgemäße System ergibt sich zudem der Vorteil, dass mittels der Steuereinheit und / oder der Cloud eine Auswertung (vorzugsweise mit Erzeugung einer entsprechenden Meldung) dahingehend getroffen werden kann, ob sich ein detektiertes Leck z.B. im Gebäude, d.h. stromabwärts des Ventils bzw. der Verbrauchsmessung oder stromaufwärts, d.h. in der das Gebäude an das Versorgungsnetz anbindenden Versorgungsleitung befindet. Wird z.B. detektiert, dass ein Druckabfall einhergeht mit einen erhöhten Durchfluss, der mittels des Medienverbrauchszählers detektiert wird, deutet dies auf eine Leckage im Gebäude hin, während ein Druckabfall ohne erhöhten Durchfluss eher auf ein Leck in der Versorgungsleitung hindeutet. Die entsprechenden Auswertungsergebnisse können über die Kommunikationsschnittstelle vorteilhaft dem Versorger mitgeteilt werden, so dass dieser dann die entsprechenden Maßnahmen gezielt ergreifen kann.

Ein Medienzustandssignal kann beispielsweise von einem an die Steuereinheit angebundenen Temperatursensor erzeugt werden. Auf diese Weise kann der Wasserversorger beispielsweise über unzulässige Temperaturanstiege an dem betroffenen Hauswasseranschluss informiert werden. Das Medienzustandssignal kann auch von einem Wasserqualitätssensor, insbesondere einem Sensor zur Erfassung von Legionellenbefall stammen. Entspricht die so erfasste Wasserqualität nicht den Anforderungen, kann eine Meldung über den Zustand des gelieferten Mediums an den Hausanschlussbesitzer und / oder den Wasserversorger gesendet werden, die ebenfalls als Push-Nachricht in einer App, als leuchtende Warnleuchte an der Steuereinheit oder über ein eingebautes Display an der Steuereinheit angezeigt werden kann. Über die Kommunikationsschnittstelle können auch hier akustische Signale über mit dem System verbundene Smart Home-Systeme, beispielsweise Alexa, ausgeben werden.

Weitere Merkmale, Einzelheiten und Vorteile der Erfindung ergeben sich aufgrund der nachfolgenden Beschreibung eines Ausführungsbeispiels der Erfindung sowie anhand der Zeichnung. Es zeigt:

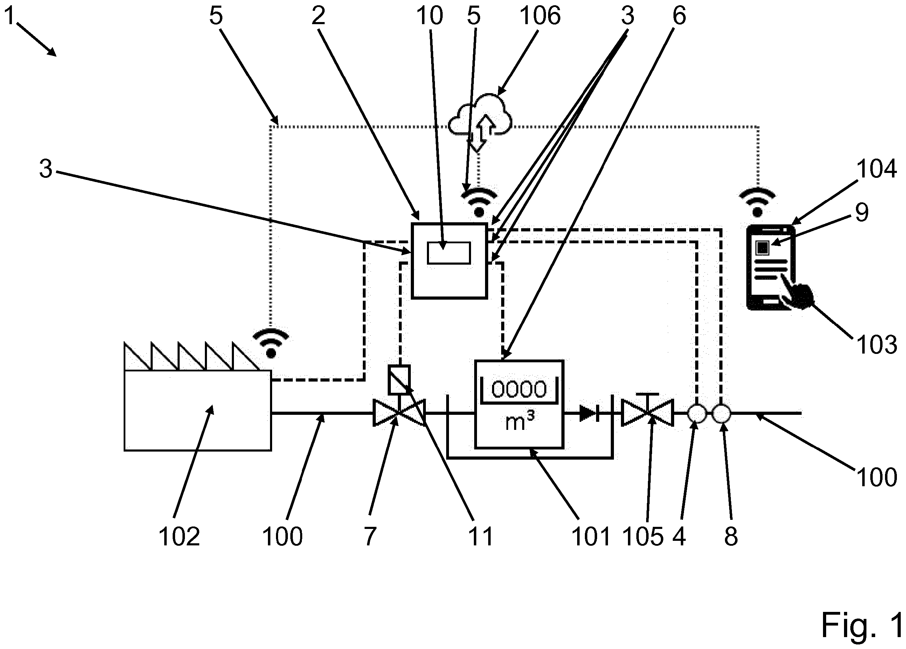

- Figur 1: erfindungsgemäßes System als Blockdiagramm.

In der Figur 1 mit dem Bezugszeichen 1 bezeichnet ist ein erfindungsgemäßes System schematisch dargestellt. Das hier gezeigte System 1 umfasst eine Steuereinheit 2, an welche über eine Anbindungsschnittstelle 3 mehrere Komponenten, wie ein Drucksensor 4 sowie ein ansteuerbares Ventil 7, angebunden sind. Mit dem ansteuerbaren Ventil 7 lässt sich der Medienfluss im gezeigten Rohrleitungssystem 100 kontrollieren und die Medienverbräuche steuern. Mit dem Drucksensor 4 lässt sich der Mediendruck im Rohrleitungssystem 100 erfassen. Über die Anbindungsschnittstelle 3 ist außerdem ein Zustandserfassungssensor 8 zur Erfassung des Medienzustandes im Rohrleitungssystem 100 an die Steuereinheit 2 angebunden. Der Zustandserfassungssensor 8 bietet ein Wasserdiagnosesystem, welches die Wasserqualität live überwacht, wobei die Steuereinheit 2 und / oder die Cloud 106 bei Abweichungen der Wasserqualität automatisch das angebundene, ansteuerbare Ventile 7 schließt und über die Kommunikationsschnittstelle 5 den ermittelten Medienzustand in einer Verdachtsmeldung kommuniziert. Die Steuereinheit 2 ist über die Anbindungsschnittstelle 3 außerdem mit einer Erfassungsschnittstelle 6 verbunden, die dazu ausgebildet ist, die von dem gezeigten Medienverbrauchszähler 101 gezählten Medienverbräuche zu erfassen. Der Medienverbrauchszähler 101 ist in dem Rohrleitungssystem 100 so angeordnet, dass er den Durchfluss im Rohrleitungssystem 100 erfasst und zählt. Das Signal des Medienverbrauchszählers 101 wird von der angebundenen Steuereinheit 2 erfasst und daraus der Medienverbrauch berechnet. Das ansteuerbare Ventil 7 ist bei dem Ausführungsbeispiel stromaufwärts des Medienverbrauchszählers 101 angeordnet. Stromabwärts des Medienverbrauchszählers ist der mit der Steuereinheit 2 verbundene Drucksensor 4 am Rohrleitungssystem 100 angeordnet. Sowohl das Drosselventil 105 als auch das ansteuerbare Ventil 7 sind vorzugsweise als Schrägsitzventile ausgebildet. Die Steuereinheit 2 ist vorzugsweise als Einplatinenrechner ausgebildet und mit einer Steuerungssoftware zur Steuerung des Systems 1 ausgestattet. Vorzugsweise verfügt die Steuereinheit 2 über ein Touch Display oder ein Display 10 mit Bedientasten, über welches Befehle eingegeben werden können. Über einen Eingabebefehl kann ein an die Steuereinheit 2 angebundenes, ansteuerbares Ventil 7 geöffnet und geschlossen werden. Mit dem System 1 können Verbrauchsdaten erfasst werden, welche an den Wasserversorger 102 oder an den Hauseigentümer 103 drahtlos übermittelt werden können. Das System 1 verfügt hierzu über eine Kommunikationsschnittstelle 5, mit welcher die Steuereinheit 2 und / oder die Cloud 106 beispielsweise mit dem Versorger 102 und dem Hausanschlussbesitzer 103 kommuniziert. Die Kommunikation über die Kommunikationsschnittstelle 5 umfasst auf den erfassten, überwachten oder gesteuerten Medienzuständen und / oder -verbräuchen basierende Daten sowie externe Befehle zur Steuerung der angebundenen Komponenten. Die in der Steuereinheit hinterlegten Daten umfassen Verbrauchsmengen, Zeitangaben, Druckangaben Temperaturangaben sowie Ventilstellungen des ansteuerbaren Ventils 7 des eingesetzten Systems 1.

Die Kommunikation mit dem Hausanschlussbesitzer 103 erfolgt im gezeigten Beispiel drahtlos, wobei Meldungen der Steuereinheit 2 und / oder der Cloud 106 beispielsweise in einer App 9 auf dem in Figur 1 beispielhaft gezeigten Smartphone 104 angezeigt werden. Die Kommunikationsschnittstelle 5 zum Wasserversorger 102 ist hier durch gestrichelte Linien drahtgebunden angedeutet, kann aber ebenfalls abschnittsweise über Funkstrecken drahtlos erfolgen. Die Kommunikationsschnittstelle 5 zur Cloud 106 ist hier durch gestrichelte Linien drahtgebunden angedeutet, kann aber ebenfalls abschnittsweise über Funkstrecken drahtlos erfolgen. Die Verbindung zum Wasserversorger 102 kann beispielsweise auch über das GSM-Netz hergestellt werden. Um Zugriff auf die Steuereinheit 2 zu haben, wird die Kommunikationsschnittstelle 5 vorzugsweise eine Vermittlungsstelle im Internet kontaktieren und bei einem Wechsel der IP-Adresse des Internetanschlusses die neue IP-Adresse zyklisch übermitteln. Durch die Mitteilung der aktuellen IP-Adresse an die Vermittlungsstelle kann die App 9 auf die Steuereinheit 2 direkt zugreifen. Auf diese Weise können die in der Steuereinheit 2 hinterlegten Verbrauchsdaten auch ohne Zwischenspeicherung auf einem Server oder in einer Cloud abgerufen werden.

Des Weiteren dient das System 1 zur Leckageerkennung, wobei bei einer auftretenden Leckage die Wasserleitung 100 automatisch abgesperrt wird.

Insbesondere der Drucksensor 4 und die mit dem Medienverbrauchszähler 101 gekoppelte Erfassungsschnittstelle 6 dienen zur Generierung eines Leckageerfassungssignals. Dieses Leckageerfassungssignal dient der Leckageerkennung durch die Steuereinheit 2 und / oder die Cloud 106 . Bei Auswertung des Leckageerfassungssignals kann die Steuereinheit 2 und / oder die Cloud 106 eine Leckage im überwachten Rohrleitungssystem 100 feststellen durch Überwachung eines Grenzwertes für das Leckageerfassungssignal. Wird dieser definierte Grenzwert überschritten oder unterschritten, kommuniziert die Steuereinheit 2 über die Kommunikationsschnittstelle 5 eine Leckageverdachtsmeldung vorzugsweise an den Hausanschlussbesitzer 103 und den Wasserversorger 102. Neben der Kommunikation einer Leckageverdachtsmeldung kann auch das ansteuerbare Ventil 7 zur Unterbindung eines Medienflusses im Rohrleitungssystem 100 durch die Steuereinheit 2 und oder die Cloud 106 automatisch geschlossen werden.

Über eine App 9 können Hauseigentümer 103 oder Mieter auf verschiedene Funktionen, wie beispielsweise eine Leckagewarnung oder den Wasserverbrauch zugreifen. Die Kopplung der App 9 auf dem Endnutzergerät 104 mit der Steuereinheit 2 erfolgt vorzugsweise durch einen Scan eines QR-Codes auf dem Gehäuse der Steuereinheit 2 oder durch Eingabe einer dort abgedruckten Zeichenkette. Die App 9 bietet vorzugsweise die Möglichkeit, die über den Medienverbrauchszähler 101 erfassten Medienverbräuche grafisch darzustellen. Hierdurch ist dem Benutzer 103 die Möglichkeit gegeben, eine Auswertung der Medienverbräuche vorzunehmen. Über eine Kalenderfunktion kann die Auswertung in einem konfigurierbaren Zeitraum erfolgen. Über die App 9 ist es auch möglich, den Medienverbrauch preisabhängig grafisch darzustellen. In der App 9 können außerdem Leckageverdachtsmeldungen zeitlich sortiert in einer Historienfunktion angezeigt werden. Außerdem bietet die App 9 die Möglichkeit, das ansteuerbare Ventil 7 des Systems 1 in bestimmten Fällen nach einer automatischen Schließung per Bildschirmeingabe zu entsperren. Die App 9 verfügt vorzugsweise außerdem über einen Expertenmodus, mit dem versteckte Funktionen des Systems 1 freigeschaltet werden können. Vorzugsweise läuft die App 9 auf Android und iOS Betriebssystemen.

Das System 1 ist vorzugsweise auch mit einem Sensor 8 zur Überprüfung der Wasserqualität (Keimkonzentration, Elektrolytgehalt, etc.) ausgestattet. Über die Kommunikationsschnittstelle 5 kann außerdem eine Medienzustandsverdachtsmeldung kommuniziert werden, wenn eine an die Steuereinheit 2 angebundene Komponente 8 zur Erfassung und Überwachung von Medienzuständen ein kritisches Medienzustandssignal liefert. Hierzu wertet die Steuereinheit 2 und / oder die Cloud 106 ein Medienzustandssignal aus und kommuniziert bei Über- oder Unterschreitung eines definierten Grenzwertes für das Medienzustandssignal eine entsprechende Fehlermeldung, vorzugsweise an den Hausanschlussbesitzer 103 und den Wasserversorger 102. Neben der Meldung eines kritischen Medienzustands kann die Steuereinheit 2 und / oder die Cloud 106 in diesem Fall auch den Medienfluss im Rohrleitungssystem 100 durch Schließung des angebundenen, ansteuerbaren Ventils 7 unterbinden. Mit einer automatischen Freigabe des Medienflusses im Rohrleitungssystem 100 durch Öffnung des ansteuerbaren Ventils 7 kann außerdem eine automatische Spülfunktion für das verunreinigte Rohrleitungssystem 100 eingerichtet werden.

Über den mittels Erfassungsschnittstelle 6 angekoppelten Medienverbrauchszähler 101 und den angebundenen Drucksensor 4 können Medienverbräuche sehr einfach durch ein aus den Zähler- und Sensordaten generiertes Medienverbrauchssignal von der Steuereinheit 2 und / oder der Cloud 106 ausgewertet werden, wobei die Auswertung des Medienverbrauchssignals eine über die Kommunikationsschnittstelle 5 kommunizierte Medienverbrauchsmeldung erzeugt. Über diese Medienverbrauchsmeldung kann der Medienverbrauch sehr einfach vom Wasserversorger 102 empfangen und verarbeitet werden. Außerdem kann durch die Kommunikation der Medienverbräuche an den Hausanschlussbesitzer 103 Transparenz bezüglich der eigenen Verbräuche und des eigenen Verbrauchsverhaltens geschaffen werden. Die App 9 verfügt vorzugsweise über eine Kalenderfunktion, in welcher der Wasserverbrauch kalendarisch angezeigt wird. Aus dieser kalendarischen Auswertung der Medienverbräuche kann außerdem im Rahmen der Leckageerkennung ein Leckageerfassungssignal generiert werden. Bei untypischen Abweichungen von dem kalendarischen ausgewerteten Medienverbrauch kann so ebenfalls eine Leckageverdachtsmeldung generiert und / oder das ansteuerbare Ventil 7 automatisch von der Steuereinheit 2 und / oder der Cloud 106 geschlossen werden.

Das System 1 bietet außerdem die Möglichkeit, die Dichtheit des Rohrleitungssystems 100 zu prüfen und so Mikroleckagen zu erkennen. Hierzu wird das Ventil 7 geschlossen und ein Druckabfall über die Zeit durch den Drucksensor 4 ermittelt.

Weiterhin bietet das System 1 die Möglichkeit, Fehler und Manipulationen am Hausanschluss zu erkennen. Sprechen die Endlagenschalter des Stellantriebes 11 am ansteuerbaren Ventil 7 nicht an kann dies ein Anzeichen für einen defekten Stellantrieb 11 sein. Meldet einer der Endlagenschalter oder die Steuereinheit 2 ein geschlossenes ansteuerbares Ventil 7 und erfasst der Medienverbrauchszähler 101 hingegen ein Durchfluss könnte der Stellantrieb 11 vom Ventil 7 entfernt worden oder das ansteuerbare Ventil defekt sein. In diesen Fall meldet die Steuereinheit 2 eine Manipulationsverdachts- und/oder Defektmeldung an den Versorger 102. Meldet der Endlagenschalter oder die Steuereinheit 2 hingengen dass das Ventil 7 offen ist, aber kein Durchflussvorhanden ist, trotz eines Druckabfalls am Drucksensor 4, könnte ebenfalls die Annahme getroffen werden, dass der Verstellantrieb 11 vom Ventil 7 entfernt wurde oder das steuerbare Ventil defekt ist. Auch in diesem Fall erhält der Versorger 102 eine Manipulationsverdachts- und/oder Defektmeldung.

Über das System 1 kann eine Prepaidfunktion für die Abnahme von Wasser eingerichtet werden. Sobald das Prepaidguthaben gemäß erfasstem Zählerstand des Medienverbrauchszähler 101 aufgebraucht ist, kann das ansteuerbare Ventil 7 über die Steuereinheit 2 und / oder die Cloud 106 geschlossen werden und der Versorger 102 sowie der Hausanschlussbesitzer 103 über das aufgebrauchte Guthaben informiert werden. Über eine Kalenderfunktion kann ausgeschlossen werden, dass das ansteuerbare Ventil 7 beispielsweise an einem Samstag oder Sonntag automatisch geschlossen wird. Hierdurch besteht für den Hausanschlussbesitzer 103 die Möglichkeit, das Guthaben an einem der anderen Wochentage bei dem Wasserversorger 102 aufzuladen.

### Bezugszeichenliste

1 System
2 Steuereinheit
3 Anbindungsschnittstelle
4 Drucksensor (Komponente)
5 Kommunikationsschnittstelle
6 Erfassungsschnittstelle (Komponente)
7 ansteuerbares Ventil (Komponente)
8 Zustandserfassungssensor (Komponente)
9 App
10 Touch Display
11 Stellantrieb
100 Rohrleitungssystem
101 Medienverbrauchszähler
102 Versorger
103 Hausanschlussbesitzer
104 Smartphone
105 Drosselventil
106 Cloud

## Patentansprüche

1. System (1) zur Erfassung, Überwachung und / oder Steuerung von Medienzuständen und / oder -verbräuchen an einem Rohrleitungssystem (100), umfassend:
- eine Steuereinheit (2),
- wenigstens eine Anbindungsschnittstelle (3), welche dazu ausgebildet ist, Komponenten (4, 6, 7, 8) zur Erfassung, Überwachung und/ oder Steuerung von Medienzuständen und / oder -verbräuchen an die Steuereinheit (2) anzubinden, und
- wenigstens eine Kommunikationsschnittstelle (5), über welche die Steuereinheit (2) auf den erfassten, überwachten oder gesteuerten Medienzuständen und / oder -verbräuchen basierende Daten kommuniziert, wobei die Komponenten des Systems (1) zur Überwachung des Medienverbrauchs wenigstens einen Drucksensor (4) zur Erfassung des Mediendruckes im Rohrleitungssystem (100) umfassen, wobei die Komponenten des Systems (1) zur Steuerung des Medienverbrauchs wenigstens ein über die wenigstens eine Anbindungsschnittstelle (3) ansteuerbares Ventil (7) umfassen, mit welchem der Medienfluss im Rohrleitungssystem (100) kontrolliert werden kann,
**dadurch gekennzeichnet,**
**dass** das ansteuerbare Ventil (7) einen Stellantrieb (11) mit Endlagenschaltern aufweist, wobei die Endlagenschalter dazu eingerichtet sind, ein geschlossenes oder offenes ansteuerbares Ventil (7) zu melden, wobei die Komponenten des Systems (1) zur Erfassung des Medienverbrauchs eine Erfassungsschnittstelle (6) umfassen, die dazu ausgebildet ist, einen von einem Medienverbrauchszähler (101) gezählten Medienverbrauch zu erfassen, wobei die Steuereinheit (2) dazu eingerichtet ist, eine Manipulationsverdachts- und/oder Defektmeldung an einen Versorger (102) zu senden, sofern der Medienverbrauchszähler (101) einen Durchfluss bei geschlossenem Ventil (7) erfasst oder sofern kein Durchfluss bei offenem Ventil (7) vorhanden ist, trotz eines Druckabfalls am Drucksensor (4).

2. System (1) nach Anspruch 1, **dadurch gekennzeichnet, dass** die Komponenten zur Steuerung des Medienzustands wenigstens ein Spülsystem und / oder vorzugsweise mindestens ein Desinfektionsmodul im Rohrleitungssystem (100) umfassen.

3. System (1) nach einem der vorhergehenden Ansprüche, **dadurch gekennzeichnet, dass** die Komponenten zur Überwachung des Medienzustands wenigstens einen Zustandserfassungssensor (8) zur Erfassung des Medienzustandes im Rohrleitungssystem (100) umfassen.

4. System (1) nach einem der vorhergehenden Ansprüche, **dadurch gekennzeichnet, dass** die Komponenten zur Erfassung des Medienverbrauchs eine Erfassungsschnittstelle (6) aufweisen, die dazu ausgebildet ist, einen von einem Medienverbrauchszähler (101) gezählten Medienverbrauch zu erfassen.

## Claims

1. System (1) for detecting, monitoring and / or controlling media conditions and / or media consumptions on a piping system (100), comprising:
- a control unit (2),
- at least one connection interface (3), which is designed to connect components (4, 6, 7, 8) for detecting, monitoring and / or controlling media conditions and / or media consumptions to the control unit (2), and
- at least one communication interface (5), via which the control unit (2) communicates data based on the detected, monitored or controlled media conditions and / or media consumptions, wherein the components of the system (1) for monitoring the media consumption comprise at least one pressure sensor (4) for detecting the media pressure in the piping system (100), wherein the components of the system (1) for controlling the media consumption comprise at least one valve (7) which can be actuated via the at least one connection interface (3) and with which the media flow in the piping system can be controlled,
**characterized in that**
the controllable valve (7) has an actuator (11) with end position switches, wherein the end position switches are set up to signal a closed or open controllable valve (7), wherein the components of the system (1) for detecting the media consumption comprise a detection interface (6) which is designed to detect a media consumption counted by a media consumption meter (101), wherein the control unit (2) is set up to send a suspected manipulation message and / or defect message to a supplier (102) if the media consumption meter (101) detects a flow rate when the valve (7) is closed or if there is no flow when the valve (7) is open, despite a pressure drop at the pressure sensor (4).

2. System (1) according to claim 1, **characterized in that** the components for controlling the medium condition comprise at least one flushing system and / or preferably at least one disinfection module in the piping system (100).

3. System (1) according to any one of the preceding claims, **characterized in that** the components for monitoring the condition of the medium comprise at least one state detection sensor (8) for detecting the condition of the medium in the piping system (100).

4. System (1) according to any one of the preceding claims, **characterized in that** the components for detecting the media consumption have a detection interface (6) which is designed to detect a media consumption counted by a media consumption meter (101).

## Revendications

1. Système (1) pour la détection, la surveillance et / ou la commande d'états de média et / ou de consommations de média sur un système de tuyauterie (100), comprenant :
- une unité de commande (2),
- au moins une interface de connexion (3), qui est conçue pour connecter à l'unité de commande (2) des composants (4, 6, 7, 8) pour la détection, la surveillance et / ou la commande d'états de média et / ou de consommations de média, et
- au moins une interface de communication (5) par laquelle l'unité de commande (2) communique des données basées sur les états de média et / ou consommations de média détectés, surveillés ou commandés, les composants du système (1) pour la surveillance de la consommation de média comprenant au moins un capteur de pression (4) pour la détection de la pression de média dans le système de tuyauterie (100), dans lequel les composants du système (1) pour la commande de la consommation de média comprenant au moins une vanne contrôlable (7) pouvant être commandée par l'intermédiaire de l'au moins une interface de connexion (3), avec laquelle le flux de média dans le système de tuyauterie peut être contrôlé,
**caractérisé en ce que**
la vanne contrôlable (7) a un actionneur (11) avec des interrupteurs de fin de course, dans lequel les interrupteurs de fin de course sont configurés pour signaler une vanne contrôlable (7) fermée ou ouverte, dans lequel les composants du système (1) pour détecter la consommation de média comprennent une interface de détection (6) qui est conçue pour détecter une consommation de média comptée par un compteur de consommation de média (101), dans lequel l'unité de commande (2) est configurée pour envoyer un message de suspicion de manipulation et / ou un message de défaut à un fournisseur (102) si le compteur de consommation de média (101) détecte un débit lorsque la vanne contrôlable (7) est fermée ou s'il n'y a pas de débit lorsque la vanne contrôlable (7) est ouverte, malgré une chute de pression au niveau du capteur de pression (4).

2. Système (1) selon la revendication 1, **caractérisé en ce que** les composants pour la commande de l'état du média comprennent au moins un système de rinçage et / ou de préférence au moins un module de désinfection dans le système de tuyauterie (100).

3. Système (1) selon l'une des revendications précédentes, **caractérisé en ce que** les composants de surveillance de l'état du média comprennent au moins un capteur de détection d'état (8) pour détecter l'état du média dans le système de tuyauterie (100).

4. Système (1) selon l'une des revendications précédentes, **caractérisé en ce que** les composants de détection de la consommation de média comprennent une interface de détection (6) qui est conçue pour détecter une consommation de média comptée par un compteur de consommation de média (101).
